# EUROPÄISCHE PATENTSCHRIFT

(11) **EP 3 245 329 B1**
(45) Veröffentlichungstag und Bekanntmachung des Hinweises auf die Patenterteilung: **20.11.2019**
(21) Anmeldenummer: 15820545.0
(22) Anmeldetag: 30.12.2015
(51) Int. Cl.: D06N 7/00, D06N 3/02

(54) **FLÄCHIGES TEXTILSUBSTRAT MIT EINER MIT WASSER AKTIVIERBAREN KLEBSTOFFBESCHICHTUNG, VERFAHREN ZUR DESSEN HERSTELLUNG UND DESSEN VERWENDUNG**
PLANAR TEXTILE SUBSTRATE WITH A WATER-ACTIVATED ADHESIVE COATING, METHOD FOR ITS PRODUCTION AND USE THEREOF
SUBSTRAT TEXTILE PLAT POURVU D'UN REVÊTEMENT D'ADHÉSIF ACTIVABLE À L'EAU, PROCÉDÉ DE PRODUCTION DE CELUI-CI ET SON UTILISATION

(30) Priorität: 14.01.2015 DE 102015200453
(43) Veröffentlichungstag der Anmeldung: 22.11.2017
(73) Patentinhaber: VITRULAN Textile Glass GmbH, 95509 Marktschorgast (DE)
(72) Erfinder: ZETTL, Heiko, 95448 Bayreuth (DE); ZAPF, Gunnar, 95369 Untersteinach (DE)
(74) Vertreter: Pfenning, Meinig & Partner mbB
(86) Internationale Anmeldenummer: PCT/EP2015/081418
(87) Internationale Veröffentlichungsnummer: WO 2016/113116

(56) Entgegenhaltungen:
- EP-A1- 1 964 966
- DE-A1- 2 533 191
- DE-A1- 10 324 472

## Beschreibung

Die Erfindung betrifft ein flächiges Textilsubstrat, das auf einer Oberfläche einer einen mit Wasser aktivierbaren Klebstoff enthaltende Beschichtung aufweist, wobei der Klebstoff eine wässrige Dispersion darstellt, die folgende Zusammensetzung aufweist.
a) 1 bis 30 Gew.-% von mindestens einer modifizierte Stärke
b) 10 bis 60 Gew.-% von mindestens einem Dextrin,
c) 0,1 bis 10 Gew.-% von mindestens einer modifizierten Zellulose,
d) 0,1 bis 20 Gew.-% von mindestens einer Verbindung ausgewählt aus der Gruppe bestehend aus Polyvinylacetaten, Ethylen-Vinylacetaten, Polyacrylaten, Polyacrylamiden, Polymethacrylaten, Polyurethanen, Polyvinylpyrrolidonen und Mischungen oder entsprechende Copolymere hiervon und
e) 0 bis 30 Gew.-% von mindestens einem Additiv und
f) 10 bis 80 Gew.-% Wasser.

Weiterhin betrifft die vorliegende Erfindung ein Verfahren zur Herstellung dieses flächigen Textilsubstrats sowie die Verwendung des Textilsubstrats als Tapete, sonstige Wand- oder Deckenbeläge sowie Tür- und Möbelverkleidung.

Aus dem Stand der Technik sind seit langer Zeit Tapeten bekannt, die eine trockene Kleisterbeschichtung aufweisen, die vor dem Anbringen z. B. an einer Wand, mit Wasser befeuchtet und damit aktiviert werden, so dass dann die Tapetenbahn an die Wand gelegt werden kann. Eine derartige Tapete ist beispielsweise aus DE2623 903 A1 bekannt.

DE10324472 A1 offenbart eine Tapete mit einer mit Wasser aktivierbaren Klebstoffschicht wobei die Klebstoffschicht zumindest folgende Komponenten enthält: A) mindestens einen Celluloseether, B) mindestens einen pH-Regulator, C) mindestens ein quellbares, nicht wasserlösliches Polymer und D) mindestens ein Sprengmittel.

EP1964966 A1 beschreibt ein textile Glasfasermaterial mit vorzugsweise einer wasseraktivierbar Klebebeschichtung enthaltend insbesondere Stärke und Cellulose bzw. Cellulosederivate.

Ein wichtiger Aspekt im Stand der Technik war bislang, dass derartige Beschichtungsmaterialien eine Anfangshaftung im nassen Zustand zeigen, dabei aber gleichzeitig über einen gewissen Zeitraum eine Verschiebung zur Korrektur zulassen.

Nachteilig bei den aus dem Stand der Technik ist es aber bislang, dass diese, sobald der Klebstoff einmal getrocknet ist, nicht zerstörungsfrei vom Untergrund im trockenen Zustand abgelöst werden können.

Aufgabe der vorliegenden Erfindung war es daher, Textilsubstrate bereit zu stellen, die sowohl in der Aufbringung, als auch in der Ablösung einfach zu handhaben sind.

Diese Aufgabe wird durch das flächige Textilsubstrat mit den Merkmalen des Anspruchs 1 und das Verfahren zu dessen Herstellung mit den Merkmalen des Anspruchs 12 gelöst. In Anspruch 14 werden erfindungsgemäße Verwendungen angegeben. Die weiteren abhängigen Ansprüche zeigen vorteilhafte Weiterbildungen auf.

Erfindungsgemäß wird ein flächiges Textilsubstrat bereit gestellt, das auf einer Oberfläche, die die Oberfläche darstellt, die mit einem Untergrund in Kontakt gebracht wird, eine einen mit Wasser aktivierbaren Klebstoff enthaltende Beschichtung aufweist. Der Klebstoff stellt dabei eine wässrige Dispersion dar und weist folgende Zusammensetzung auf:
a) 1 bis 30 Gew.-% von mindestens einer modifizierte Stärke
b) 10 bis 60 Gew.-% von mindestens einem Dextrin,
c) 0,1 bis 10 Gew.-% von mindestens einer modifizierten Zellulose,
d) 0,1 bis 20 Gew.-% von mindestens einer Verbindung ausgewählt aus der Gruppe bestehend aus Polyvinylacetaten, Ethylen-Vinylacetaten, Polyacrylaten, Polyacrylamiden, Polymethacrylaten, Polyurethanen, Polyvinylpyrrolidonen und Mischungen oder entsprechende Copolymere hiervon,
e) 0 bis 30 Gew.-% von mindestens einem Additiv und
f) 10 bis 80 Gew.-% Wasser.

Dabei ergänzen sich die Komponenten a) bis e) zu 100 Gew.-%.

Unter modifizierter Stärke sind durch physikalische, enzymatische oder chemische Verfahren gewonnene Stärke-Derivate zu verstehen, insbesondere Hydroxypropylstärke oder acetylierte Stärke.

Unter modifizierter Cellulose sind durch physikalische, enzymatische oder chemische Verfahren gewonnene Cellulose-Derivate zu verstehen, insbesondere Carboxymethylcellulose oder Methylcellulose.

Das erfindungsgemäße Textilsubstrat zeichnet sich dadurch aus, dass dieses nach Aufbringung auf einem Untergrund im trockenen Zustand vom Untergrund im Wesentlichen rückstandsfrei abziehbar ist.

Dabei ist es bevorzugt, dass der erfindungsgemäße Klebstoff mehrfach mit Wasser aktivierbar ist, so dass das Textilsubstrat mehrfach vom Substrat entfernt werden kann und durch ein erneutes Befeuchten wieder an der Stelle befestigt werden kann.. Diese Form der Reaktivierbarkeit des Klebstoffs ermöglicht somit einen Zugang zum Untergrund (z.B. bei Verteilerdosen) ohne danach eine großflächige Überarbeitung der Wand durchführen zu müssen.

Es ist bevorzugt, dass der Klebstoff von 3 bis 20 Gew.-%, insbesondere von 5 bis 15 Gew.-% der Komponente a), von 15 bis 45 Gew.-%, insbesondere von 20 bis 35 Gew.-% der Komponente b), von 0,3 bis 5 Gew.-%, insbesondere von 0,5 bis 3 Gew.-% der Komponente c), von 1 bis 10 Gew.-%, insbesondere von 2 bis 5 Gew.-% der Komponente d) und von 20 bis 70 Gew.-%, insbesondere von 40 bis 65 Gew.-% der Komponente f) enthält.

In einer weiteren bevorzugten Ausführungsform sind die im Klebstoff enthaltenen Additive ausgewählt aus der Gruppe, bestehend aus
- Konservierungsmittel, insbesondere aus der Gruppe der Isothiazolinone, aus der Gruppe der Pyrithione , aus der Gruppe der Imidazole, aus der Gruppe der Carbamate, aus der Gruppe der konservierenden Lösungsmittel, insbesondere in Mengen von 0 bis 3 Gew.-%,
- Füllstoffe, insbesondere Calciumcarbonate, Kaoline, Aluminiumhydroxide, Magnesiumhydroxide, Glashohlkugeln, Glaskugeln, Polymerkugeln, Keramikkugeln oder Quarzmehle, insbesondere in Mengen von 0 bis 30 Gew.-%,
- Fasern, insbesondere Glasfaserkurzfasern, Cellulosefasern oder Polyesterfasern oder andere synthetische Textilfasern bzw. natürliche Textilfasern wie z.B. Baumwolle, insbesondere in Mengen von 0 bis 20 Gew.-%,
- Rheologiehilfsmittel, insbesondere Acrylatverdicker, Celluloseverdicker, Polyurethanverdicker, Verdicker auf Harnstoff oder Polyharnstoff Basis oder polymere Zucker, insbesondere in Mengen von 0 bis 10 Gew.-%,
- Netzmittel, insbesondere Tenside aus der Grupper der nichtionischen, anionischen oder kationischen Tenside, insbesondere in Mengen von 0 bis 10 Gew.-%,
- Entschäumer, insbesondere Entschäumer auf Mineralölbasis; aus der Gruppe der Phosphate und Polyphosphate oder aus der Gruppe der Siloxane, insbesondere in Mengen von 0 bis 10 Gew.-%,
- Schaumstabilisatoren, insbesondere Polysiloxane, insbesondere in Mengen von 0 bis 10 Gew.-%,
- Mischungen hiervon.

Vorzugsweise weist die erfindungsgemäße Beschichtung eine Schichtdicke von 10 µm bis 5 mm, insbesondere von 50 µm bis 500 µm auf.

Das Textilsubstrat ist vorzugsweise ausgewählt aus der Gruppe bestehend aus Gewebe, Vliese, Gestricke, Gewirke, Gelege oder Kombinationen hiervon.

Besonders bevorzugt ist es, dass das Textilsubstrat Glasfasern enthält. Es ist aber möglich, dass das Textilsubstrat eine Mischtextilie, enthaltend Glasfasern und Fasern aus anderen Materialien enthält. Diese Fasern aus anderen Materialien sind vorzugsweise ausgewählt aus der Gruppe, bestehend aus
- Mineralfasern,
- Carbonfasern,
- Synthetische Fasern, insbesondere Polymerfasern, bevorzugt aus Polyestern, Polyamiden und Polyurethanen
- Viskosefasern, Zellstofffasern
- Naturfasern, insbesondere Baumwolle, Wolle, Kapok, Hanf, Leinen, Jute,
- Metallfäden sowie
- Mischungen hiervon.

Um eine Haftung des Textilsubstrats auf dem Untergrund zu erzielen, ist es bevorzugt, dass die Auftragsmenge des Klebstoffs trocken von 5 bis 100 g/m², insbesondere von 15 bis 35 g/m² beträgt.

Eine weitere bevorzugte Ausführungsform sieht vor, dass das Textilsubstrat auf der den Klebstoff enthaltenden Beschichtung abgewandten Oberfläche des Textilsubstrats einen Farbanstrich aufweist.

Ebenso ist es möglich, dass das Textilsubstrat zusätzlich eine Vinyl- oder PVC-Beschichtung aufweist.

In einer bevorzugten Ausführungsform ist vorgesehen, dass zwischen Textilsubstrat und Beschichtung weitere funktionale Elemente ausgewählt aus der Gruppe bestehend aus Akustikvlies, Schaumstoff, Wärmedämmsystem, Wärmespeichersystem, wasserabsorbierendes System, Flächenheizung, Ausgleichsschicht, IR-reflektierende Schicht, Geruchsabsorbierende Schicht, paramagnetisches System oder Kombinationen hiervon angeordnet sind.

Erfindungsgemäß wird ebenso ein Verfahren zur Herstellung eines flächigen, Glasfasern enthaltenden Substrats mit einer einen mit Wasser aktivierbaren Klebstoff enthaltenden Beschichtung, wie sie zuvor beschrieben wurde, bereit gestellt, bei dem der mindestens eine mit Wasser aktivierbare Klebstoff auf mindestens einer Oberfläche des Textilsubstrats mittels Walze, Rakel (Blattrakel, Rollrakel, Kommarakel etc), Druckwerk, Siebdruck, Vorhanggießer oder Schlitzdüse aufgetragen und getrocknet wird. Die den mit Wasser aktivierbaren Klebstoff enthaltende Beschichtung kann dabei als Schaum oder als Film aufgetragen werden.

Verwendung finden die erfindungsgemäßen Textilsubstrate in Form von Tapeten, für dekorative Wand- und Deckenbeläge, für armierende Wand- Dach-, Decken- und Bodenbeläge im Innen- und Außenbereich, für dekorative Wand- und Deckenverkleidungen, für dekorative Tür- und Möbelverkleidungen, wobei diese einen Farbanstrich aufweisen oder frei von einem Farbanstrich sind.

Anhand des nachfolgenden Beispiels soll der erfindungsgemäße Gegenstand näher erläutert werden, ohne diesen auf die hier gezeigte spezifische Ausführungsform einschränken zu wollen.

Es wurde eine erfindungsgemäße Dispersion hergestellt, die folgende Zusammensetzung aufwies:
∘ 23,3 Teile Hydroxypropylstärke
∘ 70 Teile Dextrin
∘ 4,4 Teile EVA
∘ 1,8 Teile CMC
∘ 0,5 Teile Netzmittel (Polyglykolester)
∘ Ca. 150 Teile Wasser

Die Dispersion wurde mittels Rollrakel auf die Rückseite eines Glasfasergewebes aufgetragen und in einem Lufttrockner getrocknet. Für den Versuch wurde eine Auflagemenge von 20-25 g/m² trocken aufgebracht. In einem anschließenden Praxisversuch konnte sowohl von verschiedenen Gipskartonplatten, als auch von Siebdruckplatten das Gewebe im ganzen trocken abgezogen werden.

Das Gewebe wurde für einen Test partiell von der Wand abgezogen. Nach einem Befeuchten der Stelle mittels einer konventionellen Sprühflasche konnte der abgezogene Bereich wieder an der Wand befestigt werden. Ein Abzugstest nach der Trocknung zeigte eine der Erstbefestigung äquivalente Haftung auf dem Untergrund.

## Patentansprüche

1. Flächiges Textilsubstrat, das auf einer Oberfläche einen mit Wasser aktivierbaren Klebstoff enthaltende Beschichtung aufweist, wobei der Klebstoff eine wässrige Dispersion mit folgender Zusammensetzung ist:
a) 1 bis 30 Gew.-% von mindestens einer modifizierten Stärke,
b) 10 bis 60 Gew.-% von mindestens einem Dextrin ,
c) 0,1 bis 10 Gew.-% von mindestens einer modifizierten Cellulose,
d) 0,1 bis 20 Gew.-% von mindestens einer Verbindung ausgewählt aus der Gruppe bestehend aus Polyvinylacetaten, Ethylen-Vinylacetaten, Polyacrylaten, Polyacrylamiden, Polymethacrylaten, Polyurethanen, Polyvinylpyrrolidonen und Mischungen oder entsprechende Copolymere hiervon und
e) 0 bis 30 Gew.-% von mindestens einem Additiv,
f) 10 bis 80 Gew.-% Wasser
wobei sich die Komponenten a) bis f) auf 100 Gew.-% ergänzen, **dadurch gekennzeichnet, dass** das Textilsubstrat nach Aufbringung auf einem Untergrund im trockenen Zustand vom Untergrund abziehbar ist.

2. Textilsubstrat nach Anspruch 1,
**dadurch gekennzeichnet, dass** der Klebstoff von 3 bis 20 Gew.-%, insbesondere von 5 bis 15 Gew.-% der Komponente a) und/oder von 15 bis 45 Gew.-%, insbesondere von 20 bis 35 Gew.-% der Komponente b) und/oder von 0,3 bis 5 Gew.-%, insbesondere von 0,5 bis 3 Gew.-% der Komponente c) und/oder von 1 bis 10 Gew.-%, insbesondere von 2 bis 5 Gew.-% der Komponente d) und/oder von 20 bis 70 Gew.-%, insbesondere von 40 bis 65 Gew.-% der Komponente f) enthält.

3. Textilsubstrat nach einem der vorhergehenden Ansprüche,
**dadurch gekennzeichnet, dass** die Additive ausgewählt sind aus der Gruppe bestehend aus
• Konservierungsmittel, insbesondere aus der Gruppe der Isothiazolinone, aus der Gruppe der Pyrithione , aus der Gruppe der Imidazole, aus der Gruppe der Carbamate, aus der Gruppe der konservierenden Lösungsmittel, insbesondere in Mengen von 0 bis 3 Gew.-%,
• Füllstoffe, insbesondere Calciumcarbonate, Kaoline, Aluminiumhydroxide, Magnesiumhydroxide, Glashohlkugeln, Glaskugeln, Polymerkugeln, Keramikkugeln oder Quarzmehle, insbesondere in Mengen von 0 bis 30 Gew.-%,
• Fasern, insbesondere Glasfaserkurzfasern, Cellulosefasern oder Polyesterfasern oder andere synthetische Textilfasern bzw. natürliche Textilfasern wie z.B. Baumwolle, insbesondere in Mengen von 0 bis 20 Gew.-%,
• Rheologiehilfsmittel, insbesondere Acrylatverdicker, Celluloseverdicker, Polyurethanverdicker, Verdicker auf Harnstoff oder Polyharnstoff Basis oder polymere Zucker, insbesondere in Mengen von 0 bis 10 Gew.-%,
• Netzmittel, insbesondere Tenside aus der Grupper der nichtionischen, anionischen oder kationischen Tenside, insbesondere in Mengen von 0 bis 10 Gew.-%,
• Entschäumer, insbesondere Entschäumer auf Mineralölbasis;
aus der Gruppe der Phosphate und Polyphosphate oder aus der Gruppe der Siloxane, insbesondere in Mengen von 0 bis 10 Gew.-%,
• Schaumstabilisatoren, insbesondere Polysiloxane, insbesondere in Mengen von 0 bis 10 Gew.-%,
• Mischungen hiervon.

4. Textilsubstrat nach einem der vorhergehenden Ansprüche,
**dadurch gekennzeichnet, dass** die Beschichtung eine Schichtdicke von 10 µm bis 5 mm, insbesondere von 50 µm bis 500 µm aufweist.

5. Textilsubstrat nach einem der vorhergehenden Ansprüche,
**dadurch gekennzeichnet, dass** das Textilsubstrat ausgewählt ist aus der Gruppe bestehend aus Gewebe, Vliese, Gestricke, Gewirke, Gelege oder Kombinationen hiervon.

6. Textilsubstrat nach einem der vorhergehenden Ansprüche,
**dadurch gekennzeichnet, dass** das Textilsubstrat Glasfasern enthält.

7. Textilsubstrat nach einem der vorhergehenden Ansprüche,
**dadurch gekennzeichnet, dass** das Textilsubstrat eine Mischtextilie enthaltend Glasfasern und Fasern ausgewählt aus der Gruppe bestehend aus
• Mineralfasern,
• Carbonfasern,
• Synthetische Fasern, insbesondere Polymerfasern, bevorzugt aus Polyestern, Polyamiden und Polyurethanen
• Viskosefasern, Zellstofffasern
• Naturfasern, insbesondere Baumwolle, Wolle, Kapok, Hanf, Leinen, Jute,
• Metallfäden sowie
• Mischungen hiervon.

8. Textilsubstrat nach einem der vorhergehenden Ansprüche,
**dadurch gekennzeichnet, dass** die Auftragsmenge des Klebstoffs trocken von 5 bis 100 g/m², insbesondere von 15 bis 35 g/m² beträgt.

9. Textilsubstrat nach einem der vorhergehenden Ansprüche,
**dadurch gekennzeichnet, dass** das Textilsubstrat auf der den Klebstoff enthaltenden Beschichtung abgewandten Oberfläche des Textilsubstrats einen Farbanstrich aufweist.

10. Textilsubstrat nach einem der vorhergehenden Ansprüche,
**dadurch gekennzeichnet, dass** das Textilsubstrat zusätzlich eine Vinyl- oder PVC-Beschichtung aufweist.

11. Textilsubstrat nach einem der vorhergehenden Ansprüche,
**dadurch gekennzeichnet, dass** zwischen Textilsubstrat und Beschichtung weitere funktionale Elemente ausgewählt aus der Gruppe bestehend aus Akustikvlies, Schaumstoff, Wärmedämmsystem, Wärmespeichersystem, wasserabsorbierendes System, Flächenheizung, Ausgleichsschicht, IR-reflektierende Schicht, Geruchsabsorbierende Schicht, paramagnetisches System oder Kombinationen hiervon angeordnet sind.

12. Verfahren zur Herstellung eines flächigen, Glasfasern enthaltenden Substrats mit einer einen mit Wasser aktivierbaren Klebstoff enthaltenden Beschichtung nach einem der vorhergehenden Ansprüche, bei dem der mindestens eine mit Wasser aktivierbare Klebstoff auf mindestens einer Oberfläche des Textilsubstrats mittels Walze, Rakel, Druckwerk, Siebdruck, Vorhanggießer, Sprühdüsen oder Schlitzdüse aufgetragen und getrocknet wird.

13. Verfahren nach Anspruch 12,
**dadurch gekennzeichnet, dass** die den mit Wasser aktivierbaren Klebstoff enthaltenden Beschichtung als Schaum oder als Film aufgetragen wird.

14. Verwendung des Textilsubstrats nach einem der Ansprüche 1 bis 11 in Form einer Tapete, für dekorative Wand- und Deckenbeläge, für armierende Wand- Dach-, Decken- und Bodenbeläge im Innen- und Außenbereich, für dekorative Wand- und Deckenverkleidungen, für dekorative Tür- und Möbelverkleidungen, wobei diese einen Farbanstrich aufweisen oder frei von einem Farbanstrich sind.

## Claims

1. Planar textile substrate that has a coating comprising an adhesive activatable by water on an outer side, wherein the adhesive is an aqueous dispersion having the following composition:
a) 1 to 30 wt.% of at least one modified starch,
b) 10 to 60 wt.% of at least one dextrin;
c) 0.1 to 10 wt.% of at least one modified cellulose;
d) 0.1 to 20 wt.% of at least one compound selected from the group comprising polyvinyl acetates, ethylene vinyl acetates, polyacrylates, polyacrylamides, polymethacrylates, polyurethanes, polyvinylpyrrolidones and mixtures or corresponding copolymers thereof; and
e) 0 to 30 wt.% of at least one additive; and
f) 10 to 80 wt.% water
wherein the components a) - f) add up to 100% by weight, **characterized in that** the textile substrate can be pulled off from a surface in the dried state after application to a surface.

2. Textile substrate of claim 1,
**characterized in that** the adhesive comprises 3 to 20 wt.%, in particular 5 to 15 wt.% of component a) and/or 15 to 45 wt.%, in particular 20 to 35 wt.% of component b) and/or 0.3 to 5 wt.%, in particular 0.5 to 3 wt.% of component c) and/or 1 to 10 wt.%, in particular 2 to 5 wt.% of component d) and/or 20 to 70 wt.%, in particular 40 to 65 wt.% of component f).

3. Textile substrate of any of the preceding claims,
**characterized in that** the additives are selected from the group comprising
• preservatives, in particular from the group of isothiazolinones, from the group of pyrithiones, from the group of imidazoles, from the group of carbamates, from the group of preserving solvents, in particular in quantities of 0 to 3 wt.%;
• fillers, in particular calcium carbonates, kaolins, aluminum hydroxides, magnesium hydroxides, hollow glass spheres, glass spheres, polymer spheres, ceramic spheres or quartz powders, in particular in quantities of 0 to 30 wt.%;
• fibers, in particular short fiberglass fibers, cellulose fibers or polyester fibers or other synthetic textile fibers or natural textile fibers such as cotton, in particular in quantities of 0 to 20 wt.%;
• rheological additives, in particular acrylate thickeners, cellulose thickeners, polyurethane thickeners, thickeners based on urea or polyurea or polymer sugars, in particular in quantities of 0 to 10 wt.%;
• wetting agents, in particular surfactants from the group of nonionic, anionic or cationic surfactants, in particular in quantities of 0 to 10 wt.%;
• anti-foaming agents, in particular anti-foaming agents based on mineral oil; from the group of phosphates and polyphosphates or from the group of siloxanes, in particular in quantities of 0 to 10 wt.%;
• foam stabilizers, in particular polysiloxanes, in particular in quantities of 0 to 10 wt.%;
• mixtures thereof.

4. Textile substrate of any of the preceding claims,
**characterized in that** the coating has a film thickness of 10 µm to 5 mm, in particular of 50 µm to 500 µm.

5. Textile substrate of any of the preceding claims,
**characterized in that** the textile substrate is selected from the group comprising fabrics, non-wovens, knitted fabrics, knittings, non-crimp fabrics or combinations hereof.

6. Textile substrate of any of the preceding claims,
**characterized in that** the textile substrate comprises fiberglass.

7. Textile substrate of any of the preceding claims,
**characterized in that** the textile substrate is a mixed textile comprising fiberglass and fibers selected from the group comprising
• mineral fibers;
• carbon fibers;
• synthetic fibers, in particular polymer fibers, preferably of polyesters, polyamides, and polyurethanes;
• viscous fibers, cellulose fibers;
• natural fibers, in particular cotton, wool, kapok, hemp, linen, jute;
• metal threads; and
• mixtures thereof.

8. Textile substrate of any of the preceding claims,
**characterized in that** the application quantity of the adhesive amounts to 5 to 100 g/m², in particular to 5 to 35 g/m², in the dry state.

9. Textile substrate of any of the preceding claims,
**characterized in that** the textile substrate has a coat of paint on the outer side of the textile substrate remote from the coating comprising the adhesive.

10. Textile substrate of any of the preceding claims,
**characterized in that** the textile substrate additionally has a vinyl coating or a PVC coating.

11. Textile substrate of any of the preceding claims,
**characterized in that** further functional elements are arranged between the textile substrate and the coating and are selected from the group comprising acoustic fleece, foam, a thermal insulation system, a heat storage system, a water-absorbing system, panel heating, an equalizing layer, an IR reflective layer, an odor-absorbing layer, a paramagnetic system or combinations thereof.

12. Method of manufacturing a planar substrate comprising fiberglass and having a coating comprising an adhesive activatable by water of any of the preceding claims, in which the at least one adhesive activatable by water is applied to at least one outer side of the textile substrate by means of a roller, a doctor blade, printing mechanism, screen print, curtain coater, spray nozzles or slot die and is dried.

13. Method of claim 12,
**characterized in that** the coating comprising the adhesive activatable by water is applied as a foam or as a film.

14. Use of the textile substrate of any of the claims 1 to 11 in the form of a wallpaper, for decorative wall and ceiling coverings, for reinforcing wall, roof, ceiling and floor linings indoors and outdoors, for decorative wall and ceiling covers, for decorative door and furniture covers, wherein they have a coat of paint or are free of a coat of paint.

## Revendications

1. Substrat textile plan, qui sur une surface comprend un revêtement contenant un adhésif activable par de l'eau, l'adhésif étant une dispersion aqueuse ayant la composition suivante :
a) 1 à 30 % en poids d'au moins un amidon modifié,
b) 10 à 60 % en poids d'au moins une dextrine,
c) 0,1 à 10 % en poids d'au moins une cellulose modifiée,
d) 0,1 à 20 % en poids d'au moins un composé choisi dans le groupe consistant en les poly(acétates de vinyle), les éthylène-acétates de vinyle, les polyacrylates, les polyacrylamides, les polyméthacrylates, les polyuréthannes, les polyvinylpyrrolidones et les mélanges ou copolymères correspondants de ceux-ci, et
e) 0 à 30 % en poids d'au moins un additif,
f) 10 à 80 % en poids d'eau,
la somme des composants a) à f) étant de 100 % en poids,
**caractérisé en ce que** le substrat textile, après application sur un support, peut être détaché du support à sec.

2. Substrat textile selon la revendication 1, **caractérisé en ce que** l'adhésif contient de 3 à 20 % en poids, en particulier de 5 à 15 % en poids du composant a) et/ou de 15 à 45 % en poids, en particulier de 20 à 35 % en poids du composant b) et/ou de 0,3 à 5 % en poids, en particulier de 0,5 à 3 % en poids du composant c) et/ou de 1 à 10 % en poids, en particulier de 2 à 5 % en poids du composant d) et/ou de 20 à 70 % en poids, en particulier de 40 à 65 % en poids du composant f).

3. Substrat textile selon l'une des revendications précédentes, **caractérisé en ce que** les additifs sont choisis dans le groupe consistant :
• les conservateurs, en particulier du groupe des isothiazolinones, du groupe des pyrithiones, du groupe des imidazoles, du groupe des carbamates, du groupe des solvants conservateurs, en particulier en des quantités de 0 à 3 % en poids,
• les charges, en particulier les carbonates de calcium, les kaolins, les hydroxydes d'aluminium, les hydroxydes de magnésium, les billes creuses de verre, les billes de verre, les billes polymères, les billes céramiques ou les poudres de quartz, en particulier en des quantités de 0 à 30 % en poids,
• les fibres, en particulier les fibres de verre courtes, les fibres de cellulose ou les fibres de polyester ou d'autres fibres textiles synthétiques ou fibres textiles naturelles telles que par exemple le coton, en particulier en des quantités de 0 à 20 % en poids,
• les additifs de rhéologie, en particulier les épaississants acrylates, les épaississants cellulosiques, les épaississants polyuréthannes, les épaississants à base d'urée ou de polyurée ou les sucres polymères, en particulier en des quantités de 0 à 10 % en poids,
• les mouillants, en particulier les tensioactifs du groupe des tensioactifs non-ioniques, anioniques ou cationiques, en particulier en des quantités de 0 à 10 % en poids,
• les antimoussants, en particulier les antimoussants à base d'une huile minérale ; du groupe des phosphates et des polyphosphates ou du groupe des siloxanes, en particulier en des quantités de 0 à 10 % en poids,
• les stabilisants de mousse, en particulier les polysiloxanes, en particulier en des quantités de 0 à 10 % en poids,
• les mélanges de ceux-ci.

4. Substrat textile selon l'une des revendications précédentes, **caractérisé en ce que** le revêtement présente une épaisseur de couche de 10 µm à 5 mm, en particulier de 50 µm à 500 µm.

5. Substrat textile selon l'une des revendications précédentes, **caractérisé en ce que** le substrat textile est choisi dans le groupe consistant en les tissus, les non-tissés, les articles tricotés, les article de bonneterie, les grilles ou les combinaisons de ceux-ci.

6. Substrat textile selon l'une des revendications précédentes, **caractérisé en ce que** le substrat textile contient des fibres de verre.

7. Substrat textile selon l'une des revendications précédentes, **caractérisé en ce que** le substrat textile est un produit textile mélangé contenant des fibres de verre et des fibres choisies dans le groupe consistant en
• les fibres minérales
• les fibres de carbone
• les fibres synthétiques, en particulier les fibres polymères, en particulier les fibres de polyester, de polyamide, et de polyuréthanne,
• les fibres de viscose, les fibres cellulosiques,
• les fibres naturelles, en particulier le coton, la laine, le kapok, le chanvre, le lin, le jute,
• les fils métalliques, ainsi que
• les mélanges de ceux-ci.

8. Substrat textile selon l'une des revendications précédentes, **caractérisé en ce que** la quantité appliquée de l'adhésif est à sec de 5 à 100 g/m², en particulier de 15 à 35 g/m².

9. Substrat textile selon l'une des revendications précédentes, **caractérisé en ce que** le substrat textile présente sur la surface du substrat textile opposée au revêtement contenant l'adhésif une couche de peinture.

10. Substrat textile selon l'une des revendications précédentes, **caractérisé en ce que** le substrat textile comprend en outre un revêtement vinylique ou de PVC.

11. Substrat textile selon l'une des revendications précédentes, **caractérisé en ce que** d'autres éléments fonctionnels choisis dans le groupe consistant en un non-tissé acoustique, une mousse, un système de calorifugeage, un système accumulateur de chaleur, un système absorbant l'eau, un chauffage superficiel, une couche d'équilibrage, une couche réfléchissant les IR, une couche absorbant les odeurs, un système paramagnétique ou des combinaisons de ceux-ci sont disposés entre le substrat textile et le revêtement.

12. Procédé de fabrication d'un substrat plan contenant des fibres de verre, comportant un revêtement contenant un adhésif activable par de l'eau, selon l'une des revendications précédentes, dans lequel l'au moins un adhésif activable par de l'eau est appliqué sur au moins une surface du substrat textile à l'aide d'un rouleau, d'une racle, d'un groupe d'impression, d'une sérigraphie, d'un système de coulée au rideau, de buses de pulvérisation ou d'une filière plate, et séchée.

13. Procédé selon la revendication 12, **caractérisé en ce que** le revêtement contenant l'adhésif activable par de l'eau est appliqué sous forme d'une mousse ou d'un film.

14. Utilisation du substrat textile selon l'une des revendications 1 à 11 sous forme d'un papier peint, pour des revêtements décoratifs muraux et de plafond, des revêtements muraux, de toit, de plafond et de sol renforcés pour applications en intérieur et en extérieur, pour des revêtements muraux et de plafonds décoratifs, pour des revêtements décoratifs pour portes et meubles, ces derniers comportant une couche de peinture ou ne comportant pas de couche de peinture.
